# EUROPEAN PATENT SPECIFICATION

(11) **EP 0 981 104 B1**
(45) Date of publication and mention of the grant of the patent: **05.04.2006**
(21) Application number: 99114255.5
(22) Date of filing: 28.07.1999
(51) Int. Cl.: G06K 15/00, B41J 29/393

(54) **Computer printer initialization**
Initialisierung eines Computerdruckers
Initialisation d'une imprimante d'ordinateur

(30) Priority: 29.07.1998 JP 21459398
(43) Date of publication of application: 23.02.2000
(73) Proprietor: SEIKO EPSON CORPORATION, Shinjuku-ku, Tokyo 163-0811 (JP)
(72) Inventor: Teradaira, Mitsuaki, Suwa-shi, Nagano-ken 392-8502 (JP); Nishioka, Atsushi, Suwa-shi, Nagano-ken 392-8502 (JP); Kawase, Yuji, Suwa-shi, Nagano-ken 392-8502 (JP)
(74) Representative: Hoffmann, Eckart

(56) References cited:
- US-A- 4 678 316
- US-A- 5 325 209
- US-A- 5 457 516

## Description

The present invention relates to a printing apparatus, a method of initializing it, and a computer-readable storage medium carrying a program for controlling the apparatus so that it carries out that method. More particularly, the present invention relates to an initialization control process that is executed upon the apparatus having been turned on, and an initialization control process that is executed in response to a reset request received from a host device to which the apparatus is adapted to be connected.

Printing apparatuses (simply referred to below as "printers") that perform a predetermined power-on initialization process when they are turned on, i.e., in response to a so-called power-on reset, when they begin operating, and also when they receive a reset request from a host computer or the host device of a point-of-sale (POS) terminal at which the printer is used, are known.

Systems in which the power supplies of the printer and host device are linked such that printer and host device are substantially simultaneously turned on are also widely used, for example, in POS systems. In such case, when printer and host device are turned on, first the BIOS (Basic Input Output System) of the host device typically sends a reset request to the printer, then the operating system (OS) that runs on the host device sends another reset request to the printer, and finally the application program that runs on the OS sends still another reset request to the printer. When a conventional printer that executes a predetermined power-on initialization process, is used in this type of system, switching on the host device and the printer causes the latter to receive multiple reset requests from the host device before it can complete its power-on initialization process.

When the printer receives a reset request, the CPU controlling general printer operation is reset. This causes CPU operation to stop and drives all I/O ports to a high impedance state, thus interrupting any power-on initialization process still in progress.

Printer initialization typically includes the following tasks:
- initializing control circuits such as the CPU controlling printer operation, and a RAM used as a communications buffer for communicating with the host device;
- excitement of stepping motor phase for matching the operating phase of, for example, the stepping motor for driving the print head in the printing line direction;
- a cleaning process for cleaning the printing elements of the print head to assure high print quality; and
- moving the print head to position it at a reference position in the printing line direction.

Some of these initialization processes require more time than others. For example, phase excitement of the stepping motors requires relatively little time, while print head positioning and print head cleaning require relatively much time.

Interrupting such initialization involves a variety of problems. The cleaning process required to clean the ink jet print head of an ink jet printer includes a suction step in which a vacuum pump is used to suck ink off the print head. This process consumes much ink. It also takes time for the sucking to actually begin once the vacuum pump starts operating, and interrupting the cleaning process is therefore also a wasteful use of time. Yet further, interrupting this cleaning process once ink suction has begun means the amount of ink that has been sucked off already is unknown. The suction step can therefore not be resumed, and must be repeated from the beginning. This obviously consumes even more ink than does completing the suction step uninterrupted.

When reset requests are repeatedly issued, the initialization process is performed in response to each reset request. This causes the following problems.

A stepping motor must be driven to position the print head at a reference position. Needlessly repeating this positioning process needlessly advances the wear of the mechanical parts in the whole drive chain involved in this positioning. It is not normally possible to know where the print head is positioned when this operation starts. It is therefore necessary to move the print head to a known position against a stopper, and repeatedly driving the print head against this stopper can damage the print head.

In case of ink jet printers, repeatedly performing the cleaning process described above consumes a needlessly large amount of ink, and thus makes it necessary to replace the ink cartridge sooner.

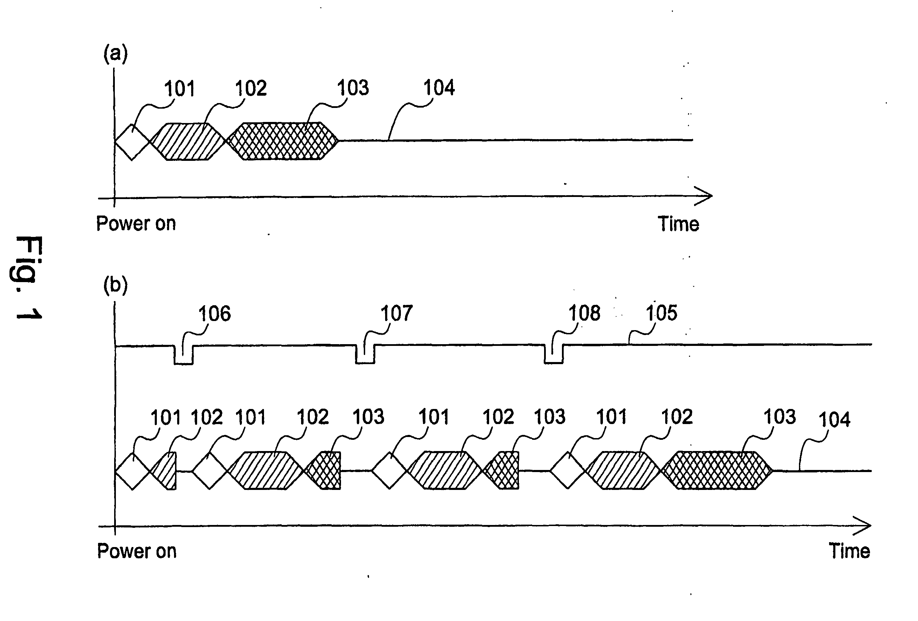

Repeatedly performing the initialization processes is illustrated in Fig. 1. Fig. 1 (a) relates to the case where the power supplies of printer and host device are not linked, and shows the sequence of processes performed when printer is turned on while the host device is operating already. The first step of this initialization process after the printer has been turned on, is stepping motor phase excitement 101, followed by print head positioning 102, and print head cleaning 103. The printer then proceeds to normal operation 104 in which it waits for a print command and data from the host device.

Fig. 1(b) shows a sequence of processes typically performed when a conventional printer is connected to a host device such that power supply to the printer and the host device is turned on substantially simultaneously as described above. In Fig. 1(b) a reset signal is issued by the host device to the printer at the rising edge following a drop of the potential 105 at the reset signal output. As a result, low level pulses 106, 107, and 108 of the potential 105 indicate reset signals received by the printer.

After the printer has completed stepping motor phase excitement 101 and while print head positioning 102 is still in progress, it receives the reset signal 106 from the host device BIOS. Print head positioning 102 is therefore interrupted, and stepping motor phase excitement 101 and print head positioning 102 are repeated from the beginning. This time stepping motor phase excitement 101 and print head positioning 102 are completed, and reset signal 107 is then received from the host device OS while print head cleaning 103 is in progress. Print head cleaning 103 is therefore interrupted, and stepping motor phase excitement 101, print head positioning 102, and print head cleaning 103 are repeated from the beginning. This time reset signal 108 is received while print head cleaning 103 is in progress. Print head cleaning 103 is therefore again interrupted, and stepping motor phase excitement 101, print head positioning 102, and print head cleaning 103 are again repeated from the beginning.

In consideration of the above-described problems, an object of the present invention is to provide a printing apparatus and a method of initializing it, which are capable of preventing an unnecessary consumption of consumables in the printing apparatus and a loss of mechanical durability, as a result of a power-on initialization process being interrupted by a reset signal applied to the printer by a host device immediately after the host device is turned on.

This object is achieved with a printing apparatus or printer as claimed in claim 1, a method as claimed in claim 13 and a storage medium as claimed in claim 24. Preferred embodiments of the invention are subject-matter of the dependent claims.

In accordance with the invention certain initialization processes can be delayed until a predetermined delay time T1 has passed after the printer was turned on. A print head and other printing mechanism initialization processes are not performed before this delay time has passed, even if the printer receives a reset request from the host device. Thus, operating costs can be reduced by preventing, e.g., an ink-consuming cleaning process from being consecutively performed multiple times, and by preventing needless wear of mechanical parts of the printing mechanism.

Needless wear of mechanical parts of the printing mechanism can be also be prevented and operating costs reduced because it is not necessary to actually drive stepping motors, gears, and other parts of the drive chain used to move and position the print head multiple times.

The time required for initializing the printer can be shortened by completing in advance initialization processes that do not incur ink consumption and mechanical parts wear even if performed repeatedly. The time required for initializing the printer can be shortened, for instance, by completing in advance a process for adjusting the phase of a stepping motor, which does not incur consumption of consumables or wear of mechanical parts.

The delay time can be stored statically by the printer and changed dynamically according to the operating environment. The delay time can also be set from the host device to which the printer is connected. In accordance with a particular embodiment, the printer can automatically learn an appropriate delay time through actual operation of the printer in conjunction with the host device.

Other objects and attainments together with a fuller understanding of the invention will become apparent and appreciated by referring to the following description of preferred embodiments taken in conjunction with the accompanying drawings, in which:
- Fig. 1: shows a typical initialization process sequence of a conventional printer in which initialization begins when the printer is turned on;
- Fig. 2: schematically illustrates the basic structure of a printer embodying the present invention;
- Fig. 3: is a functional block diagram of a printer according to a first preferred embodiment of the present invention;
- Fig. 4: is a flow chart of an initialization control process in a printer according to the first embodiment;
- Fig. 5: shows a time chart of initialization processes performed in a printer according to the present invention when operation starts after the printer is turned on;
- Fig. 6: is a functional block diagram of a printer according to a second preferred embodiment of the present invention;
- Fig. 7: is a flow chart of an initialization control process in a printer according to the second embodiment; and
- Fig. 8: is a flow chart of an initialization control process in a printer according to a third preferred embodiment of the present invention.

### Basic structure of a printer according to the invention

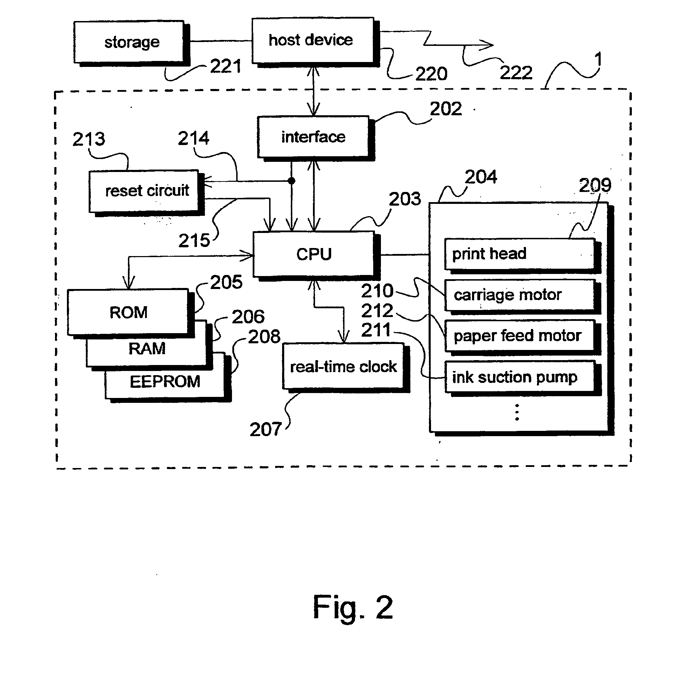

Fig. 2 shows the basic structure of a typical example of a printer to which the present invention can be applied. As shown in Fig. 2 the printer, generally denoted by 1, is connected to host device 220. Printer 1 comprises a printing mechanism 204 controlled by a CPU 203. The CPU 203 is connected to a ROM 205, a RAM 206, an EEPROM 208, a real-time clock (RTC) 207, a reset circuit 213 and an interface 202.

Commands and print data sent from the host device 220 to the printer 1 are received through the interface 202. The CPU 203 interprets control commands received through the interface 202 to drive the printing mechanism 204 for printing text and/or graphics on the paper or another printing medium.

In addition to control commands, the host device 220 can also send a reset request through the interface 202 to the printer 1. While this example and the following description assumes a reset request is sent as an external reset signal, it could as well be sent as reset request command. Generally, the printer decides a reset condition based on various settings set in accordance with various commands sent from the host device. It is to be noted, however, that if the CPU 203 is not operating normally, such reset request may not be normally executed. It is therefore preferable for a reset request command or external reset signal to be interpreted by a circuit which is independent of the CPU and generates a reset signal provided to a reset terminal of the CPU.

In the example shown, an external reset signal 214 is not only input to and detected by the CPU 203, but is also input to the reset circuit 213. Reset circuit 213 is typically used as a power supply monitoring IC, and resets the CPU 203 by passing a reset pulse 215 of predetermined width to the reset terminal of the CPU 203 after the supply voltage has stabilized to a normal level after the printer's power supply has been switched on. In this example a reset pulse is also output in response to the external reset signal 214. This is to prevent a runaway operation of the CPU 203 by applying a reset pulse 215 of a predetermined width even when the pulse width of an external reset signal is extremely short. This can be achieved, for example, with a wired-OR connection of a negative logic external reset signal from the interface circuit to the voltage monitoring terminal of the reset circuit 213.

It is also possible to use an external reset signal that is input directly to the CPU 203 as a reset warning signal by delaying the external reset signal 214 a predetermined delay time Td and then generating the reset pulse 215 as described more fully in EP-A-0 911 172. The CPU 203 is thus allowed a predetermined time between when the external reset signal 214 is detected and when the CPU 203 is reset by the reset pulse 215. The CPU 203 thus has enough time to handle required processes, such as setting an external reset flag, before the CPU 203 resets. It is to be noted that this delay time Td can be easily achieved by means such as a delay line, a timer circuit, or a counter. Furthermore, this delay time Td can be used most effectively by detecting the external reset signal 214 in real time; in preferred embodiments of the invention the external reset signal 214 is, therefore, applied to a non-maskable interrupt (NMI) terminal of the CPU 203.

The control processes performed by the CPU 203 are defined by a control program stored in ROM 205. When the printer 1 is turned on, the CPU 203 runs, in response to the reset pulse 215 from the reset circuit 213, a program stored in ROM 205 and starting at a predetermined address. The CPU 203 typically reads the program from ROM 205 into RAM 206, and runs the program from RAM 206. Loading the program into RAM 206, allows it to be modified to dynamically change the predetermined reset process(es) performed.

The CPU 203 creates images of the text and/or graphics to be printed in RAM 206, and drives the printing mechanism 204 based on these images. The CPU 203 uses font data stored in ROM 205 to generate an image of text to be printed based on character codes received as print data from the host device 220.

The real-time clock 207 counts the time in seconds, for example. The CPU 203 is connected to the real-time clock 207 by way of an I/O port or a bus so that it can obtain the current time as needed. It should be noted that real-time clock ICs with an internal timer function have also been developed. Using such devices it is possible for the CPU 203 to set the timer to generate a CPU interrupt at a predetermined time.

Nonvolatile memory such as the EEPROM 208 or a Flash ROM can be rewritten with information from the CPU 203 when power is supplied to the printer 1, and statically store the information even when the power is turned off. It is to be noted that such functionality can also be achieved by, for example, adding a battery backup circuit to static RAM (SRAM) devices.

The printing mechanism 204 has a print head 209, a carriage motor 210 for moving the print head 209 parallel to the printing line direction, and a paper feed motor 212 for transporting paper or other printing medium. High precision positioning and improved print quality can be achieved by using stepping motors for the carriage and paper feed motors. It will be obvious to one with ordinary skill in the art that various other DC motor with encoder combinations can be alternatively used. An ink suction pump 211 is needed in case printer 1 is an ink jet printer and print head 209, thus, an ink jet head. In that case the pump is used for print head cleaning, that is, for sucking relatively high viscosity ink that has been left in print head 209 for a period of time.

In the example explained so far the control program is stored in ROM 205. If it is stored instead in a rewritable nonvolatile storage device, such as EEPROM 208,, the control program can be updated from the host device 220, for example. It is also possible for the host device 220 to store the printer control program in its own internal data storage, or for the control program to be stored on CD-ROM, a hard disk, floppy disk, or other external storage 221 accessible by the host device 220. Yet further, the control program can stored on a network server or even the network itself, thus enabling the host device to download the control program via the Internet or other computer network in order then to upload it to the printer.

### First Embodiment

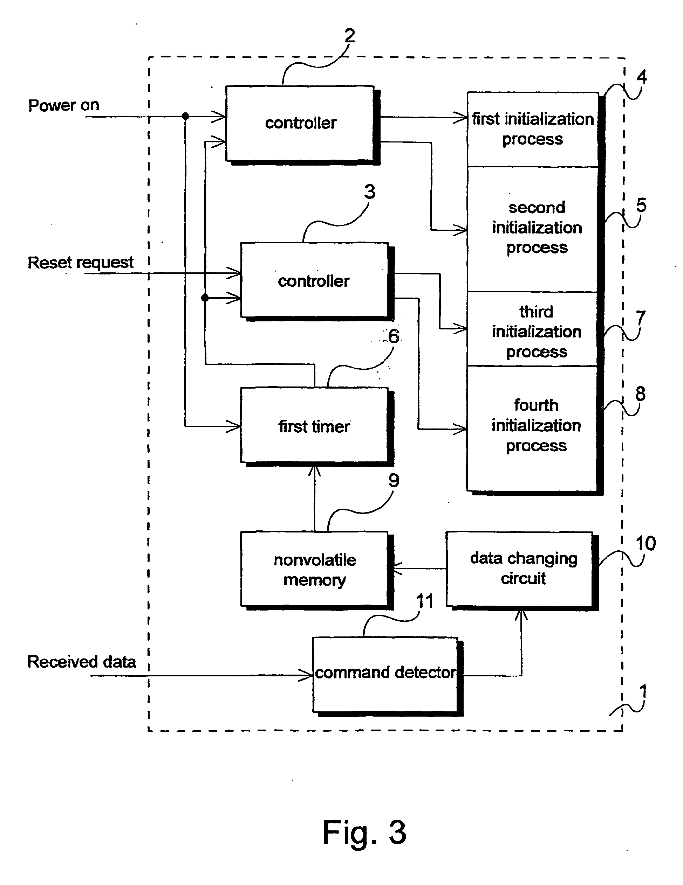

Fig. 3 is a functional block diagram of a printer according to a first exemplary embodiment of the present invention. The particular structure of the printer is not critical to the invention as long the required functions can be realized. For a better understanding the following description of this and the following embodiments assumes a respective printer implemented by the hardware structure shown in Fig. 2.

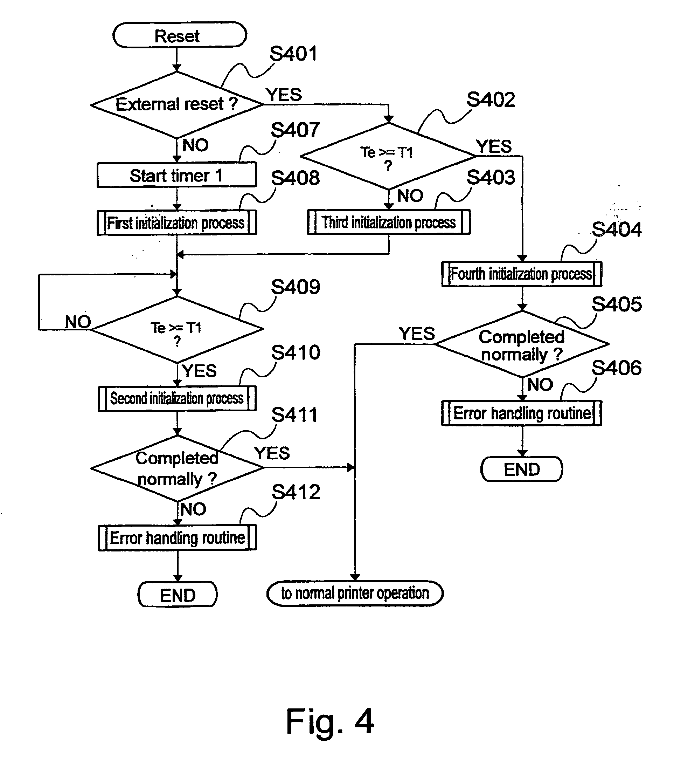

Turning to Fig. 3, a power-on initialization controller 2 controls a so-called power-on initialization of the printer 1, i.e., an initialization executed in response to the printer being turning on. A first timer 6 starts counting at the power-on time, i.e., when printer 1 starts operating just after it has been turned on (cf. step S407 in Fig. 4 explained later), and notifies the controller 2 and a reset initialization controller 3 when a predetermined delay time T1 elapses.

When printer 1 is turned on, controller 2 starts a first initialization process 4.This first initialization process 4 comprises processes that can be completed in an extremely short period of time, and that will not cause any problems if interrupted, such as control circuit initialization and phase excitation of the stepping motors used for the carriage motor 210 and paper feed motor 212. When this first initialization process 4 ends, controller 2 waits for a notification from the first timer 6 that delay time T1 has elapsed. Upon receiving this notification, controller 2 begins a second initialization process 5.

This second initialization process 5 includes operations that require a relatively long period of time, and which can be the source of a problem if interrupted. In this exemplary embodiment, these operation include, for example, cleaning the print head 209 and positioning the print head 209 by means of carriage motor 210 as described above.

When this second initialization process 5 ends, the printer 1 enters a normal printing process standby state. When the printer 1 receives a print command and print data from the connected host device, it performs a normal printing process according to the received print data.

When the printer 1 receives a reset request from the host device or other external control device, the controller 3 initializes the printer 1 in response to the reset request. The controller 3 can determine whether the delay time T1 has elapsed since the printer was turned on based upon the output from the first timer 6.

If this delay time T1 has not elapsed when a reset request is received from the host device, controller 3 performs a third initialization process 7. This third initialization process 7 preferably includes tasks that can be completed in a short time, similarly to the first initialization process 4, and further preferably includes only tasks which, if interrupted, will not result in undesirable consequences. It is to be noted that this third initialization process 7 can be the same as the first initialization process 4. In response to a reset request, an tialization process can, thus, be executed which is the same as the or part of the initialization process performed when printer power turns on, and printer reliability can thus be improved.

If the delay time T1 as counted by the first timer 6 has elapsed when a reset request is received, controller 3 performs a fourth initialization process 8. This fourth initialization process 8 is performed alternatively to the third initialization process 7, and includes, in addition to the tasks of the third initialization process 7, relatively time-consuming tasks such as print head positioning and ink jet head cleaning, that is, tasks equivalent to those performed in the second initialization process 5. It is to be noted that this fourth initialization process 8 can be a combination of the first and second initialization processes.

Thus, in response to reset requests from the host device occurring within the delay time T1 after the printer operation starts, the controller 3 performs only the third initialization process. A complete initialization process, such as the fourth initialization process, can then be performed in response to reset requests received after this delay time, such as reset requests issued in conjunction with a printing request. Problems arising from an initialization process being interrupted by frequent reset requests issued immediately after the host device is turned on can therefore be avoided.

As mentioned, the third initialization process is preferably substantially the same as the first initialization process. The first initialization process performed when the printer is turned on, and the third initialization process based on a reset request from the host device, can thus be accomplished by means of the same circuits or software. This could be accomplished quite simply, for example, by connecting the reset terminal of the CPU to obtain the logical OR of the power-on reset signal and the reset signal received from the host device.

When the third initialization process is included in the fourth initialization process, processing reset requests from the host device can be started using the same circuit or software irrespective of whether or not the delay time T1 has passed (see Fig. 4 explained later: step S403 would precede step S402 rather than follow it; subsequent to step S402 either would step S404 performed or step S409).. An extremely simple circuit or software design can thus be used. For example, a reset signal from the host device can be input to the CPU interrupt terminal, and the value of a timer evaluated during the interrupt process to determine which process is to be run.

If the delay time T1 is set based on the time required for all reset requests issued by the host device at host device startup, the problems arising from interrupting the initialization process performed when the printer is turned on can be avoided.

The value of the delay time T1 is stored in nonvolatile memory 9, and can be changed as desired by means of a data changing or updating circuit 10. Data that printer 1 according to this first embodiment receives from a host device is interpreted by a command detector 11. If the command detector 11 detects a command requesting that the value of T1 stored in nonvolatile memory 9 be changed, it can instruct the data changing circuit 10 to change the stored value based on the received command and accompanying parameters.

Comparing the functional diagram of Fig. 3 with the structural diagram of Fig. 2, the controller 2 of the first embodiment comprises reset circuit 213, CPU 203, and memory (ROM 205 and RAM 206), and the controller 3 comprises interface 202, reset circuit 213, CPU 203, and memory. The first timer 6 comprises real-time clock 207, CPU 203, and memory. Nonvolatile memory 9 comprises EEPROM 208, data changing circuit 10 comprises CPU 203 and memory, and command detector 11 comprises CPU 203 and memory.

An initialization control process of printer 1 according to this first embodiment when the printer is turned on is described next with reference to the flow chart in Fig. 4.

As noted above, reset circuit 213 outputs a reset pulse 215 when the supply voltage has stabilized after printer 1 was turned on. Reset pulse 215 is held at an active level until the supply voltage reaches a certain level. When the supply voltage reaches that level and a predetermined period has passed, more specifically, when time sufficient for the CPU 203 to complete an internal circuit reset operation has passed, the reset pulse 215 goes inactive, and the CPU 203 begins running the process shown in Fig. 4 starting from step S401.

At step S401 the CPU 203 detects the cause for the reset operation, that is, whether the CPU's reset operation was in response to an external reset signal or because the printer was turned on. This can be determined by evaluating the state of an external reset flag, which is set when the CPU 203 detects an external reset signal 214. Note that this external reset flag must be reset when power supply stops. Preferably, therefore, the external reset flag is stored in memory for which the default state when power is turned on, is assured to be the reset state of the external flag, or the external reset flag is stored in EEPROM and the address area at which it is stored is instantaneously cleared when the power supply is stopped so that the external flag assumes the reset state. In this first embodiment the external reset flag is set and together with a reset start time stored in EEPROM 208 in an NMI process that is invoked by external reset signal 214. The reset start time is the time at which an external reset signal is detected.

The CPU 203 checks this external reset flag in step S401, and determines that an external reset occurred if the flag is set, and a power-on reset if the flag is not set. The CPU 203 then compares the current time obtained from the real time clock 207 with the stored reset start time, and, if the difference between these two times does not correspond to the delay time Td, it determines, regardless of the state of the external reset flag, that a power-on reset occurred. This prevents determination errors that could result, for example, when a power-on reset occurs immediately after the external reset signal 214 is applied.

If the CPU 203 determines that a power-on reset occurred, it starts the first timer 6 at step S407. The time at which timer 6 is started is referred to as power-on time. Following step S407 the CPU 203 performs the first initialization process 4 in step S408.

Based on the first timer 6, step S409 determines whether the delay time T1 has passed, i.e., whether the time Te elapsed since the power-on time is equal to or larger than T1, and, if not, the CPU 203 waits until it has passed. When T1 has passed, the second initialization process 5 is performed.

Step S411 then determines whether the first and second initialization processes finished normally. If not, an error handling routine (S412) is performed. Otherwise the printer proceeds to normal operation.

It is to be noted that the first timer in this first embodiment comprises the real-time clock 207. That is, starting the timer started in step S407 means the current time is read from real-time clock 207 and stored. Then in step S409, the difference between the stored time and the current time obtained again from real-time clock 207 is calculated, and this difference is compared with T1. The present invention is not limited to this type of timer, however, and various other means can be used to the same effect. For example, a real-time clock having a timer function can be used and set to a predetermined time (current time plus T1) in step S407. Then when this preset time is detected by the timer and the clock generates an interrupt, a flag is set to indicate that T1 has passed. Then in step S409 the state of this flag is simply checked. Yet further alternatively, the first timer can comprise a counter or timer that is not affected by resetting the CPU 203.

Referring again to Fig. 4, if step S401 detects an external reset, the CPU 203 resets the external reset flag, and detects whether T1 has passed since the power-on time (S402). If T1 has not passed, the third initialization process is performed (S403), and the procedure advances to step S409. If T1 has passed, the fourth initialization process is performed (S404). The CPU 203 then detects whether the initialization process completed normally (S405). If not, an error handling routine (S406) is performed. Otherwise the printer proceeds to normal operation and waits for a print command and data from the host device 220.

It is to be noted that the error handling routines (S406, S412) typically drive LEDs or other indicators on the printer, and/or pass an error signal through interface 202 to the host device 220, to notify the operator that an error has occurred.

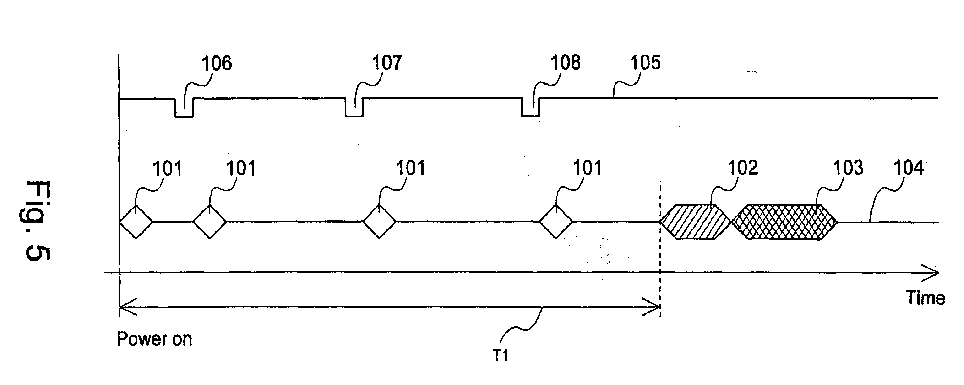

An exemplary initialization sequence performed when a printer according to this embodiment is turned on, is shown in Fig. 5 and described below.

As will be obvious from a comparison with the sequence shown in Fig. 1 (b), the first initialization process (step S408) is performed each time an external reset signal 214 is received (at reset pulses 106, 107, and 108), but the second initialization process 5 (step S410) is not performed. This second initialization process 5 is performed only after delay time T1 has passed since the power-on time (step S410). In addition to preventing the second initialization process from being repeatedly performed, with the accompanying needless wear of mechanical parts and large ink consumption, this method enables initialization of the printer to complete as quickly as possible in response to the needs of the operating environment of the host device to which the printer is connected.

When printer 1 receives a reset signal from host device 220 after proceeding to a normal printing process, the fourth initialization process 8 can be immediately performed as it is the case in a conventional printer.

### Second Embodiment

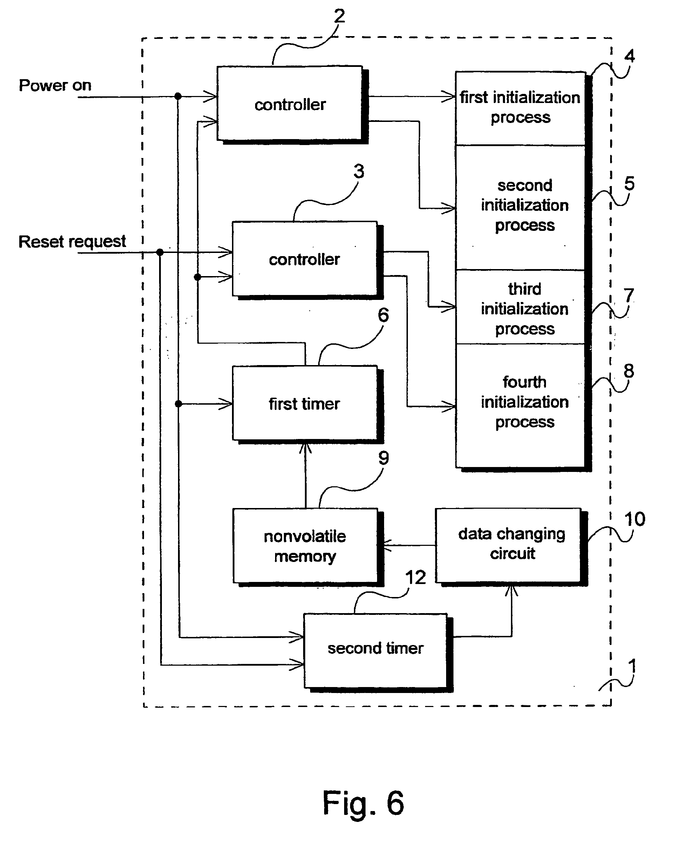

Fig. 6 is a block diagram of a printer according to a second exemplary embodiment of the present invention. It is to be noted that like parts in Fig. 6 and Fig. 3 are identified by like reference numerals and will not be explained again.

This second embodiment improves the first embodiment with respect to the means for changing the delay time T1 to be measured by the first timer 6. Printer 1 according to this second embodiment further comprises a second timer 12 for counting the elapsed time Te since the power-on time. As will be explained in more detail later, this second timer 12 is used to determine a new value for the delay time T1. The value of T1 stored in nonvolatile memory 9 is then updated to this new value by means of data changing circuit 10. The second timer 12 of this second embodiment can be implemented with real-time clock 207, CPU 203, and memory in case the second embodiment is realized with the hardware structure illustrated in Fig. 2.

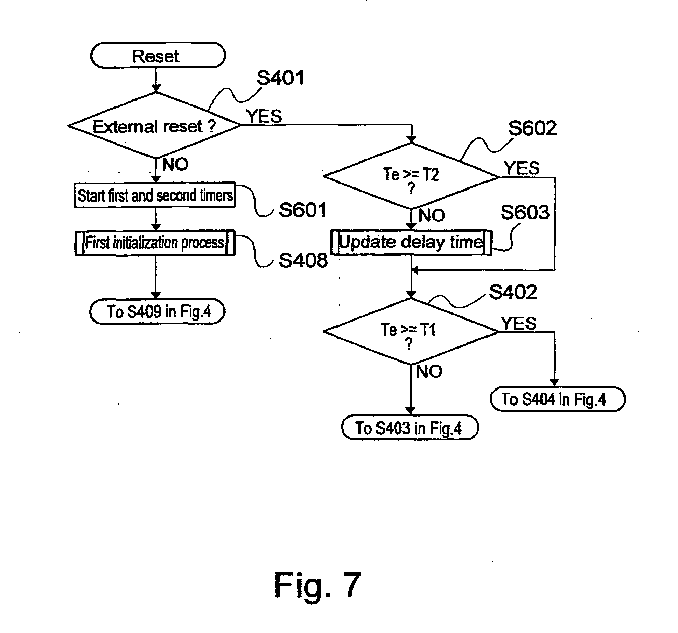

The initialization control process of printer 1 according to the second embodiment is described below with reference to the flow chart in Fig. 7. It is to be noted that a substantial part of the initialization method of the second embodiment is identical to that of the first embodiment shown in Fig. 4. Like steps are therefore indicated with like reference numerals, and further description thereof is thus omitted below. The steps following steps S408 and S402 in Fig. 7 which not shown are the same as in Fig. 5.

When the printer's power supply is turned on, the reset circuit 213 generates a reset pulse 215 causing the control process shown in Fig. 7 to start. Like in Fig. 4, the first step S401 in this process is to determine whether the reset was caused by the printer being turned on or by an external reset signal. If step S401 determines that the cause is that the printer was turned on, both the first timer 6 and the second timer 12 are started (S601). The first initialization process is then performed (S408) as described in the first embodiment above.

If, on the other hand, step S401 determines the cause of the reset to be an external reset signal, the process proceeds to step S602 which detects whether the time Te counted by the second timer 12 has reached a predetermined reference time T2. If Te has not reached T2, the value of the delay time T1 as counted by the first timer 6 is updated in step S603, More specifically, the time Te to which the second timer 12 has counted is set as a new value of the delay time T1. It is important to note, however, that this new value may again be changed in response to a subsequently occurring external reset. This updated value of the delay time T1 is therefore not used immediately as the setting for the first timer, which is currently counting, but is instead first used the next time the first timer is started, that is, at the next power-on reset.

Step S402 then detects whether the delay time T1 has passed since the power-on time.

If at step S602 the reference time T2 has passed, the process skips updating the delay time T1 (step S603) and proceeds to step S402.

This embodiment sets the delay time T1 that is used as the setting for the first timer 6, according to the last one of external resets that are generated after the power-on time and before lapse of the reference time T2. More specifically, T1 is defined as the time interval from the power-on time to the reset start time of this last external reset plus a predetermined margin, which in this exemplary embodiment is 4 seconds by way of example only. It is therefore possible to dynamically calculate the shortest possible delay time T1 according to the predetermined timing of successive external reset signals applied in response to the host device to which printer 1 is connected being turned on. This makes it additionally possible to start the second initialization process at the earliest possible time, and thus also to complete the second initialization process earlier. The predetermined margin compensates for slight variations in host device characteristics, and stable initialization can thus be achieved.

It will be obvious that the reference time T2 should be longer than the combined total time of the duration of and the intervals between successive reset signals issued when host device is turned on. However, if that total time is particularly long and T2 is set even longer, the start of the second initialization process will be delayed, and completion of the power-on reset operation will be delayed. To avoid this, this second time period is set in this exemplary embodiment to a time that will normally allow for commencement of the substantive initialization process, namely the second initialization process, within about one minute.

In this embodiment, when the reference time T2 is set equal to the maximum available value for the delay time T1, the delay time can be set within the range below this maximum value. It is therefore possible to prevent an infinite delay in the start of the second initialization process, and the printer startup time can be regulated.

It should also be noted that the second timer 12 can be comprised identically to the first timer 6, and further description thereof is thus omitted below.

### Third Embodiment

The above-described first and second embodiments of the present invention solve the problem of repeated printer resets occurring when the host device is turned on. The solution uses a first timer 6 to determine the initialization process to be performed based on whether or not the delay time T1 has passed since the power-on time. With these embodiments, however, the second initialization process cannot begin until T1 has passed, and the printer startup time, that is, the delay until the printer is ready to start a normal printing process, increases accordingly.

There are, therefore, cases in which it is desirable not to use the initialization control process of the first or the second embodiment which both delay the second initialization process. Such cases include cases where the processes corresponding to those of the above-noted second initialization process are not necessary, such as when print head cleaning is not necessary when the printer is turned on, and when the printer is turned on after the host device is already running.

A printer according to this third embodiment of the present invention, therefore, selectively initializes the printer according to a first mode using an initialization control process according to the first or the second embodiment of the invention, or according to a second mode using a conventional initialization control process.

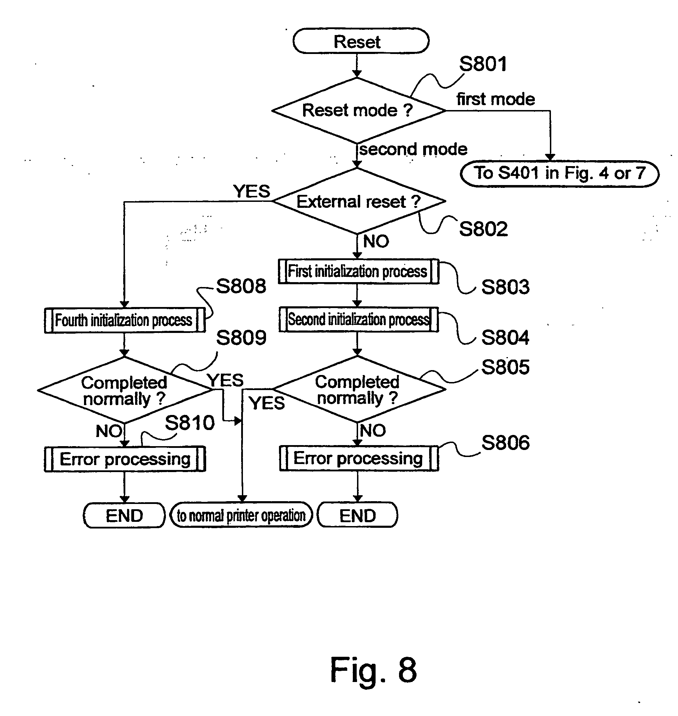

Function and circuit block diagrams for a printer according to this third embodiment of the invention are identical to those of the first and the second embodiment, respectively. The initialization control process differs, however, and is described below with reference to the flow chart in Fig. 8.

When the printer is turned on, the reset circuit 213 sends a reset pulse 215 to the CPU 203 to effect a power-on reset operation. This reset pulse causes CPU 203 to begin the process shown in Fig. 8, and determine in step S801 which reset mode to use. More specifically, the CPU 203 determines whether to run a reset process according to the first mode or to run a reset process according to the second mode. This determination can be made with reference to a DIP switch or other hardware setting means (not shown in the figures) provided on the printer 1. Alternatively, a setting received as a control command from the host device can be stored in EEPROM 208, and this setting retrieved to make the determination. In other words which mode to select is preset.

If step S801 selects the first mode, control passes to step S401 of one of the processes described above with reference to the first and the second embodiment. The corresponding process is then performed. If step S801 selects the second mode, the cause of the reset operation is detected in step S802. This process is the same as that of step S401.

If a power-on reset is detected, the first and second initialization processes are performed in steps S803 and S804. These processes are normally performed consecutively, and can therefore normally end before the delay time T1 has passed. Step S805 then detects whether the initialization processes have completed normally. If not, an error handling routine (S806) is performed. If initialization ends normally, the printer is ready for printing and awaits a print command and print data from the host device.

If an external reset is detected in step S802, the fourth initialization process (S808) is performed. This initialization process is then followed by an error handling routine (S810) or normal printing process as described above.

In this embodiment, when the printer is turned on, it is determined, for example, whether print head cleaning is necessary. If it is, the first mode is selected; if not, the second mode can be selected. It should be noted that if the second initialization process is selected when cleaning is not necessary, the cleaning process is not included in the second initialization process. As a result, the second initialization process can be interrupted without resulting in unnecessary ink consumption. The second mode can therefore be selected in this case to perform all initialization processes without waiting for the delay time T1 to pass, and thereby shorten the printer startup time.

It should be further noted that the present invention has the greatest benefit when interrupting the print head cleaning process can be avoided. The first and second initialization processes are therefore mutually exclusive, and print head cleaning is preferably included in the second initialization process, that is, print head cleaning is preferably not included in the first initialization process.

The above embodiments of a printer according to the present invention have been described using an ink jet printer by way of example. The invention is not limited to ink jet printers, however, and a variety of other printing mechanisms can be alternatively used, including dot impact, thermal, and electrophotographic printing mechanisms. The present invention can be applied with these and other types of printers by handling in the second initialization process any initialization tasks that require a certain amount of time or that are desirably not repeatedly performed

It is to be noted that the delay time Td, the delay time T1, the reference time T2 etc. used to determine the initialization process performed, can each be a fixed value stored in ROM 205, or a plurality of values can be stored and selected according to predetermined DIP switch settings and/or control commands.

## Claims

1. A printing apparatus adapted to be connected to a host device (220), comprising:
a print head;
a first controller (2) for initializing the printing apparatus the when printing apparatus is turned on; and
first timer means (6) for detecting whether or not a predetermined delay time (T1) has lapsed since the printing apparatus started operating;
wherein said first controller (2) is responsive to said first timer (6) for performing a first initialization process (4) before lapse of said delay time (T1), and performing a second initialization process (5) differing from the first initialization process (4) after lapse of said first delay time.

2. The apparatus as set forth in claim 1, further comprising
a second controller (3) for initializing the printing apparatus in response to a reset request from the host device (220);
wherein said second controller (3) is responsive to said first timer means (6) for performing a third initialization process (7) in response to a reset request received before lapse of said delay time, and performing a fourth initialization process (8) that is not the same as the third initialization process (7), in response to a reset request received after lapse of said delay time.

3. The apparatus as set forth in claim 2, wherein the third initialization process (7) is substantially the same as the first initialization process (4).

4. The apparatus as set forth in claim 2, wherein the third initialization process (7) is included in the fourth initialization process (8).

5. The apparatus as set forth in claim 1, further comprising
nonvolatile memory means (9) for storing a value representing said delay time (T1); and
a data updating means (10) for updating said stored value.

6. The apparatus as set forth in claim 5, further comprising a command detector (11) for detecting a predetermined command in data received from the host device (220);
wherein the data updating means (10) is responsive to said command detector (11) for updating said stored value in accordance with the predetermined command.

7. The apparatus as set forth in claim 5, further comprising
reset detecting means for detecting the last startup reset request, which is the last reset request in a plurality of reset requests generated by the host device startup process; and
second timer means (12) for measuring the time (Te) elapsed from the start of printing apparatus operation to the last startup reset request as detected by the reset detecting means;
wherein the data updating means (10) updates said stored value based on the elapsed time (Te) measured by the second timer means (10).

8. The apparatus as set forth in claim 7, wherein the reset detecting means is adapted to detect, as the last startup reset request, the last reset request received before the elapsed time measured by the second timer means (12) reaches a predetermined reference time (T2) longer than said delay time (T1).

9. The apparatus as set forth in claim 5, further comprising
second timer means (12) for measuring the elapsed time (Te) since the printing apparatus started operating; and
comparison means for comparing the elapsed time (Te) with a predetermined reference time (T2);
wherein said data updating means (10) is responsive to said second timer means (12), said comparison means (12) and each reset request that is received from said host device (220) while said comparison means indicates said elapsed time (Te) is shorter than said reference time (T2), for updating said stored value to a new one representing said elapsed time (Te) at the moment the respective reset request is received.

10. The apparatus as set forth in claim 7, wherein the data updating means (10) is adapted to update said stored value to a new one corresponding to said elapsed time (Te) plus a predetermined time.

11. The apparatus as set forth in any one of the preceding claims, further comprising a mode selector for selecting either a first mode or a second mode;
wherein said first controller (2) is responsive to said mode selector for performing said first initialization process (4) before lapse of said delay time (T1), and performing said second initialization process (5) after lapse of said delay time, when said first mode is selected while performing both said first and said second initialization process (5) before lapse of said delay time (T1) when said second mode is selected.

12. The printing apparatus as set forth in any one of the preceding claims, wherein the first initialization process (4) and second initialization process (5) are mutually exclusive, and
a print head cleaning process is included in the second initialization process (5).

13. A method for initializing a printing apparatus as defined in any one of the preceding claims, comprising:
(a) initializing the printing apparatus when it is turned on; and
(b) detecting whether or not a predetermined delay time (T1) has lapsed since the printing apparatus started operating; wherein step (a) comprises
(c) performing a first initialization process (4) before lapse of said delay time (T1) is detected in step (b), and
(d) performing a second initialization process (5) differing from the first initialization process (4) after lapse of said delay time (T) is detected in step (b).

14. The method as set forth in claim 13, further comprising:
(e) initializing the printing apparatus in response to a reset request from the host device (220), by
(f) performing a third initialization process (7) in response to a reset request received before lapse of said delay time (T1), and
(g) performing a fourth initialization process (8) that is not the same as the third initialization process (7) in response to a reset request received after lapse of said delay time (T1).

15. The method as set forth in claim 14, wherein the third initialization process (7) is substantially the same as the first initialization process (4).

16. The method as set forth in claim 14, wherein the third initialization process (7) is included in the fourth initialization process (8).

17. The method as set forth in claim 13, further comprising:
(h) statically storing a value representing said delay time (T1); and
(i) updating the value stored in step (h).

18. The method as set forth in claim 17, further comprising:
(j) detecting a predetermined command in data received from the host device (220);
wherein step (i) updates the stored value in accordance with the predetermined command detected in step (j).

19. The method as set forth in claim 17, further comprising:
(k) detecting the last startup reset request, which is the last reset request in a plurality of reset requests generated by the host device startup process; and
(l) measuring the time (Te) elapsed from the start of printing apparatus operation to the last startup reset request as detected in step (k);
wherein step (i) updates said stored value based on the elapsed time (Te) measured in step (I).

20. The method as set forth in claim 19, wherein step (k) comprises:
(m) detecting, as the last startup reset request, the last reset request received before the elapsed time (Te) measured in step (l) reaches a predetermined reference time (T2) longer than said delay time (T1).

21. The method as set forth in claim 19, wherein step (i) comprises:
(n) updating said stored value to a new one corresponding to said elapsed time (Te) plus a predetermined time.

22. The method as set forth in claim 13, further comprising:
(o) selecting a first mode wherein steps (c) and (d) are performed only when the first mode is selected.

23. The method as set forth in any one of claims 13 to 22, wherein the first initialization process (4) and second initialization process (5) are mutually exclusive, and
a print head cleaning process is included in the second initialization process (5).

24. A computer-readable data storage medium carrying program code which when executed in a printing apparatus as defined in any one of claims 1 to 12 carries out the method according to any one of claims 13 to 23.

## Patentansprüche

1. Druckvorrichtung, die zur Verbindung mit einem Host-Gerät (220) ausgeführt ist, aufweisend:
einen Druckkopf;
eine erste Steuerung (2) zum Initialisieren der Druckvorrichtung, wenn die Druckvorrichtung eingeschaltet wird; und
ein erstes Zeitgebermittel (6) zum Detektieren, ob eine vorgegebene Verzögerungszeit (T1) seit Beginn des Betriebs der Druckvorrichtung abgelaufen ist oder nicht;
bei der die erste Steuerung (2) auf den ersten Zeitgeber (6) anspricht, um einen ersten Initialisierungsprozess (4) vor dem Ablauf der Verzögerungszeit (T1) auszuführen, und einen zweiten Initialisierungsprozess (5), der sich vom ersten Initialisierungsprozess (4) unterscheidet, nach dem Ablauf der ersten Verzögerungszeit auszuführen.

2. Vorrichtung nach Anspruch 1, ferner aufweisend
eine zweite Steuerung (3) zum Initialisieren der Druckvorrichtung als Antwort auf eine Reset-Anforderung vom Host-Gerät (220);
bei der die zweite Steuerung (3) auf das erste Zeitgebermittel (6) anspricht, um einen dritten Initialisierungsprozess (7) als Antwort auf eine Reset-Anforderung auszuführen, die vor dem Ablauf der Verzögerungszeit empfangen wird, und einen vierten Initialisierungsprozess (8), der nicht der gleiche ist wie der dritte Initialisierungsprozess (7), als Antwort auf eine Reset-Anforderung, die nach dem Ablauf der Verzögerungszeit empfangen wird.

3. Vorrichtung nach Anspruch 2, bei der der dritte Initialisierungsprozess (7) im Wesentlichen gleich ist dem ersten Initialisierungsprozess (4).

4. Vorrichtung nach Anspruch 2, bei der der dritte Initialisierungsprozess (7) im vierten Initialisierungsprozess (8) enthalten ist.

5. Vorrichtung nach Anspruch 1, ferner aufweisend
ein nicht flüchtiges Speichermittel (9) zum Speichern eines die Verzögerungszeit (T1) repräsentierenden Wertes; und
ein Datenaktualisierungsmittel (10) zum Aktualisieren des gespeicherten Wertes.

6. Vorrichtung nach Anspruch 5, ferner einen Befehlsdetektor (11) zum Detektieren eines vorgegebenen Befehls in Daten, die vom Host-Gerät (220) empfangen werden, aufweisend;
bei der das Datenaktualisierungsmittel (10) auf den Befehlsdetektor (11) anspricht, um den gespeicherten Wert gemäß dem vorgegebenen Befehl zu aktualisieren.

7. Vorrichtung nach Anspruch 5, ferner aufweisend
ein Reset-Detektormittel zum Detektieren der letzten Hochfahr-Resetanforderung, bei der es sich um die letzte Reset-Anforderung aus einer Mehrzahl Reset-Anforderungen handelt, die vom Hochfahrprozess des Host-Geräts erzeugt werden; und
ein zweites Zeitgebermittel (12) zum Messen der Zeit (Te), die vom Beginn des Betriebs der Druckvorrichtung bis zur letzten Hochfahr-Resetanforderung, die vom Reset-Detektormittel detektiert worden ist, vergangen ist;
bei der das Datenaktualisierungsmittel (10) den gespeicherten Wert auf Basis der vom zweiten Zeitgebermittel (12) gemessenen abgelaufenen Zeit (Te) aktualisiert.

8. Vorrichtung nach Anspruch 7, bei der das Reset-Detektormittel so ausgeführt ist, dass es die letzte Reset-Anforderung als die letzte Hochfahr-Reset-Anforderung erkennt, die empfangen wird, bevor die vom zweiten Zeitgebermittel (12) gemessene Zeit eine vorgegebene Referenzzeit (T2) erreicht, die länger ist als die Verzögerungszeit (T1).

9. Vorrichtung nach Anspruch 5, ferner aufweisend
ein zweites Zeitgebermittel (12) zum Messen der abgelaufenen Zeit (Te), seit die Druckvorrichtung den Betrieb startete; und
ein Vergleichsmittel zum Vergleichen der abgelaufenen Zeit (Te) mit einer vorgegebenen Referenzzeit (T2);
bei der das Datenaktualisierungsmittel (10) auf das zweite Zeitgebermittel (12), das Vergleichsmittel und jede Reset-Anforderung, die vom Host-Gerät (220) empfangen wird, anspricht, während das Vergleichsmittel angibt, dass die abgelaufene Zeit (Te) kürzer ist als die Referenzzeit (T2), um den gespeicherten Wert auf einen neuen zu aktualisieren, der die abgelaufene Zeit (Te) in dem Moment repräsentiert, in dem die jeweilige Reset-Anforderung empfangen wird.

10. Vorrichtung nach Anspruch 7, bei der das Datenaktualisierungsmittel (10) so ausgeführt ist, dass es den gespeicherten Wert auf einen neuen Wert entsprechend der abgelaufenen Zeit (Te) plus einer vorgegebenen Zeit aktualisiert.

11. Vorrichtung nach einem der vorigen Ansprüche, ferner einen Modusselektor zum Wählen entweder eines ersten Modus oder eines zweiten Modus aufweisend;
bei der die erste Steuerung (2) auf den Modusselektor anspricht, um den ersten Initialisierungsprozess (4) vor dem Ablauf der Verzögerungszeit (T1) und den zweiten Initialisierungsprozess (5) nach Ablauf der Verzögerungszeit auszuführen, wenn der erste Modus gewählt ist, während sowohl der erste als auch der zweite Initialisierungsprozess (5) vor dem Ablauf der Verzögerungszeit (T1) ausgeführt werden, wenn der zweite Modus gewählt ist.

12. Druckvorrichtung nach einem der vorigen Ansprüche, bei der sich der erste Initialisierungsprozess (4) und der zweite Initialisierungsprozess (5) gegenseitig ausschließen und
ein Druckkopf-Reinigungsprozess im zweiten Initialisierungsprozess (5) enthalten ist.

13. Verfahren zum Initialisieren einer Druckvorrichtung nach einem der vorigen Ansprüche, aufweisend:
(a) Initialisieren der Druckvorrichtung, wenn diese eingeschaltet wird; und
(b) Detektieren, ob eine vorgegebene Verzögerungszeit (T1) seit dem Start des Betriebs der Druckvorrichtung abgelaufen ist oder nicht; bei dem Schritt (a) aufweist
(c) Ausführen eines ersten Initialisierungsprozesses (4), bevor der Ablauf der Verzögerungszeit (T1) in Schritt (b) detektiert wird, und
(d) Ausführen eines zweiten Initialisierungsprozesses (5), der sich vom ersten Initialisierungsprozess (4) unterscheidet, nachdem der Ablauf der Verzögerungszeit (T1) in Schritt (b) detektiert wird.

14. Verfahren nach Anspruch 13, ferner aufweisend:
(e) Initialisieren der Druckvorrichtung als Antwort auf eine Reset-Anforderung vom Host-Gerät (220) durch
(f) Ausführen eines dritten Initialisierungsprozesses (7) als Antwort auf eine Reset-Anforderung, die vor dem Ablauf der Verzögerungszeit (T1) empfangen wird, und
(g) Ausführen eines vierten Initialisierungsprozesses (8), der nicht der gleiche ist wie der dritte Initialisierungsprozess (7), als Antwort auf eine Reset-Anforderung, die nach dem Ablauf der Verzögerungszeit (T1) empfangen wird.

15. Verfahren nach Anspruch 14, bei dem der dritte Initialisierungsprozess (7) im Wesentlichen gleich ist dem ersten Initialisierungsprozess (4).

16. Verfahren nach Anspruch 14, bei dem der dritte Initialisierungsprozess (7) im vierten Initialisierungsprozess (8) enthalten ist.

17. Verfahren nach Anspruch 13, ferner aufweisend:
(h) statisches Speichern eines Wertes, der die Verzögerungszeit (T1) repräsentiert; und
(i) Aktualisieren des in Schritt (h) gespeicherten Wertes.

18. Verfahren nach Anspruch 17, ferner aufweisend:
(j) Detektieren eines vorgegebenen Befehls in Daten, die vom Host-Gerät (220) empfangen werden;
bei dem in Schritt (i) der gespeicherte Wert gemäß dem in Schritt (j) detektierten vorgegebenen Befehl aktualisiert wird.

19. Verfahren nach Anspruch 17, ferner aufweisend:
(k) Detektieren der letzten Hochfahr-Resetanforderung, die die letzte Reset-Anforderung in einer Mehrzahl Reset-Anforderungen ist, die vom Hochfahrprozess des Host-Geräts erzeugt werden; und
(I) Messen der Zeit (Te), die vom Start des Betriebs der Druckvorrichtung bis zur letzten Hochfahr-Resetanforderung, wie sie in Schritt (k) detektiert wird, abgelaufen ist:
bei dem in Schritt (i) der gespeicherte Wert auf Basis der in Schritt (I) gemessenen abgelaufenen Zeit (Te) aktualisiert wird.

20. Verfahren nach Anspruch 19, bei dem Schritt (k) aufweist:
(m) Detektieren derjenigen letzten Reset-Anforderung als die letzte Hochfahr-Reset-Anforderung, die empfangen wird, bevor die in Schritt (I) gemessene Zeit eine vorgegebene Referenzzeit (T2) erreicht, die länger ist als die Verzögerungszeit (T1).

21. Verfahren nach Anspruch 19, bei dem Schritt (i) aufweist:
(n) Aktualisieren des gespeicherten Wertes auf einen neuen Wert entsprechend der abgelaufenen Zeit (Te) plus einer vorgegebenen Zeit.

22. Verfahren nach Anspruch 13, ferner aufweisend:
(o) Wählen eines ersten Modus, bei dem die Schritte (c) und (d) nur dann ausgeführt werden, wenn der erste Modus gewählt ist.

23. Verfahren nach einem der Ansprüche 13 bis 22, bei dem sich der erste Initialisierungsprozess (4) und der zweite Initialisierungsprozess (5) gegenseitig ausschließen und
ein Druckkopf-Reinigungsprozess im zweiten Initialisierungsprozess (5) enthalten ist.

24. Computerlesbares Datenspeichermedium, das einen Programmcode trägt, der bei Ausführung in einer Druckvorrichtung nach einem der Ansprüche 1 bis 12 das Verfahren gemäß einem der Ansprüche 13 bis 23 ausführt.

## Revendications

1. Appareil d'impression conçu pour être connecté à un dispositif (220) hôte comprenant :
une tête d'impression ;
une première unité (2) de commande pour initialiser l'appareil d'impression lorsque l'appareil d'impression est mis sous tension ; et
un premier moyen (6) compteur de temps pour détecter si oui ou non un temps (T1) de retard déterminé à l'avance s'est écoulé depuis que l'appareil d'impression a commencé à fonctionner ;
dans lequel la première unité (2) de commande est sensible au premier compteur de temps (6) pour effectuer un premier processus (4) d'initialisation avant l'écoulement du temps (T1) de retard, et pour effectuer un deuxième processus différent du premier processus (4) d'initialisation après écoulement du premier temps de retard.

2. Appareil suivant la revendication 1, comprenant en outre :
une deuxième unité (3) de commande pour initialiser l'appareil d'impression en réponse à une demande de réinitialisation provenant du dispositif (220) hôte ;
dans lequel la deuxième unité (3) de commande est sensible au premier moyen (6) compteur de temps pour effectuer un troisième processus (7) d'initialisation en réponse à une demande de réinitialisation reçue avant l'écoulement du temps de retard, et effectuer un quatrième processus (8) d'initialisation qui n'est pas identique au troisième processus (7) d'initialisation, en réponse à une demande de réinitialisation reçue après écoulement du temps de retard.

3. Appareil suivant la revendication 2, dans lequel le troisième processus (7) d'initialisation est sensiblement identique au premier processus (4) d'initialisation.

4. Appareil suivant la revendication 2, dans lequel le troisième processus (7) d'initialisation est compris dans le quatrième processus (8) d'initialisation.

5. Appareil suivant la revendication 1, comprenant en outre :
un moyen (9) à mémoire non volatile pour mémoriser une valeur représentant le temps (T1) de retard ; et
un moyen (10) de mise à jour de données pour mettre à jour la valeur mémorisée.

6. Appareil suivant la revendication 5, comprenant en outre un détecteur (11) d'instruction pour détecter une instruction déterminée à l'avance dans des données reçues du dispositif (220) hôte ;
dans lequel le moyen (10) de mise à jour de données est sensible au détecteur (11) d'instruction pour mettre à jour la valeur mémorisée en conformité avec l'instruction déterminée à l'avance.

7. Appareil suivant la revendication 5, comprenant en outre :
un détecteur (11) de détection de réinitialisation pour détecter la dernière demande de réinitialisation qui est la dernière demande de réinitialisation d'une pluralité de demandes de réinitialisation produites par le processus de démarrage du dispositif hôte ; et
un deuxième moyen (12) compteur de temps pour mesurer le temps (Te) s'étant écoulé du début du fonctionnement de l'appareil d'impression jusqu'à la dernière demande de réinitialisation de démarrage telle qu'elle a été détectée par le moyen de détection de réinitialisation ;
dans lequel le moyen (10) de mise à jour de données met à jour la valeur mémorisée sur la base du temps (Te) écoulé mesuré par le deuxième moyen (12) compteur de temps.

8. Appareil suivant la revendication 7, dans lequel le moyen de détection de réinitialisation est apte à détecter, en tant que dernière demande de réinitialisation de démarrage, la dernière demande de réinitialisation reçue avant que le temps écoulé mesuré par le deuxième moyen (12) compteur de temps atteigne un temps (T2) de référence déterminé à l'avance plus long que le temps (T1) de retard.

9. Appareil suivant la revendication 5, comprenant en outre :
un deuxième moyen (12) compteur de temps pour mesurer le temps (Te) s'étant écoulé depuis que l'appareil d'impression a commencé à fonctionner ; et
un moyen de comparaison pour comparer le temps (Te) écoulé à un temps (T2) de référence déterminé à l'avance ;
dans lequel le moyen (10 de mise à jour de données est sensible au deuxième moyen (12) compteur de temps, au moyen (12) de comparaison et à chaque demande de réinitialisation reçue du dispositif (220) hôte lorsque le moyen de comparaison indique que le temps (Te) écoulé est plus court que le temps (T2) de référence, pour mettre à jour la valeur mémorisée à une nouvelle valeur représentant le temps (Te) écoulé au moment où la demande de réinitialisation respective est reçue.

10. Appareil suivant la revendication 7, dans lequel le moyen (10) de mise à jour de données est apte à mettre à jour la valeur mémorisée à une nouvelle valeur correspondant au temps (Te) écoulé plus un temps déterminé à l'avance.

11. Appareil suivant l'une quelconque des revendications précédentes, comprenant en outre un sélecteur de mode pour sélectionner soit un premier mode, soit un deuxième mode ;
dans lequel la première unité (2) de commande est sensible au sélecteur de mode pour effectuer le premier processus (4) d'initialisation avant écoulement du temps (T1) de retard, et exécuter le deuxième processus (5) d'initialisation après écoulement du temps de retard, lorsque le premier mode est sélectionné alors qu'on effectue à la fois les premier et deuxième processus (5) d'initialisation avant l'écoulement du temps (T1) de retard lorsque le deuxième mode est sélectionné.

12. Appareil d'impression selon l'une quelconque des revendications précédentes, dans lequel le premier processus (4) d'initialisation et le deuxième processus (5) d'initialisation sont mutuellement exclusifs, et
un processus de nettoyage de tête d'impression est compris dans le deuxième processus (5) d'initialisation.

13. Procédé d'initialisation d'un appareil d'impression suivant l'une quelconque des revendications précédentes, comprenant :
(a) l'initialisation de l'appareil d'impression lorsqu'il est mis sous tension ; et
(b) le fait de détecter si oui ou non un temps (T1) de retard déterminé à l'avance s'est écoulé depuis que l'appareil d'impression a commencé à fonctionner ; l'étape (a) comprenant :
(c) l'exécution d'un premier processus (4) d'initialisation avant que l'écoulement du temps (T1) de retard ait été détecté à l'étape (b), et
(d) l'exécution d'un deuxième processus (5) d'initialisation différent du premier processus (4) d'initialisation après que l'écoulement du temps (T) de retard ait été détecté à l'étape (b).

14. Procédé suivant la revendication 13, comprenant en outre :
(e) l'initialisation de l'appareil d'impression en réponse à une demande de réinitialisation provenant du dispositif hôte (220), par :
(f) l'exécution d'un troisième processus (7)
d'initialisation en réponse à une demande de réinitialisation reçue avant écoulement du temps (T1) de retard ; et
(g) l'exécution d'un quatrième processus (8) d'initialisation qui n'est pas identique au troisième processus (7) d'initialisation en réponse à une demande de réinitialisation reçue après écoulement du temps (T1) de retard.

15. Procédé suivant la revendication 14, dans lequel le troisième processus (7) d'initialisation est sensiblement identique au premier processus (4) d'initialisation.

16. Procédé suivant la revendication 14, dans lequel le troisième processus (7) d'initialisation est compris dans le quatrième processus (8) d'initialisation.

17. Procédé suivant la revendication 13, comprenant en outre :
(h) la mémorisation statique d'une valeur représentant le temps (T1) de retard ; et
(i) la mise à jour de la valeur stockée lors de l'étape (h).

18. Procédé suivant la revendication 17, comprenant en outre :
(j) la détection d'une instruction déterminée à l'avance dans des données reçues du dispositif (220) hôte ;
dans lequel l'étape (i) met à jour la valeur mémorisée en conformité avec l'instruction déterminée à l'avance détectée à l'étape (j).

19. Procédé suivant la revendication 17, comprenant en outre :
(k) la détection de la dernière demande de réinitialisation de démarrage qui est la dernière demande de réinitialisation d'une pluralité de demandes de remises à zéro produites par le processus de démarrage du dispositif hôte ; et
(1) la mesure du temps (Te) écoulé du début du fonctionnement de l'appareil d'impression jusqu'à la dernière demande de réinitialisation de démarrage telle qu'elle a été détectée à l'étape (k) ;
dans lequel l'étape (i) met à jour la valeur mémorisée sur la base du temps (Te) écoulé mesuré à l'étape (1).

20. Procédé suivant la revendication 19, dans lequel l'étape (k) comprend :
(m) la détection, en tant que la dernière demande de réinitialisation de démarrage, de la dernière demande de réinitialisation reçue avant que le temps écoulé (Te) mesuré à l'étape (1) n'atteigne un temps (T2) de référence déterminé à l'avance supérieur au temps (T1) de retard.

21. Procédé suivant la revendication 19, dans lequel l'étape (i) comprend :
(n) la mise à jour de la valeur mémorisée à une nouvelle valeur correspondant au temps (Te) écoulé plus un temps déterminé à l'avance.

22. Procédé suivant la revendication 13, comprenant en outre :
(o) la sélection d'un premier mode dans lequel les étapes (c) et (d) ne sont exécutées que lorsque le premier mode est sélectionné.

23. Procédé suivant l'une quelconque des revendications 13 à 22, dans lequel le premier processus (4) d'initialisation et le deuxième processus (5) d'initialisation sont mutuellement exclusifs, et
un processus de nettoyage de tête d'impression est compris dans le deuxième processus (5) d'initialisation.

24. Support de mémorisation de données lisibles par ordinateur portant un code de programme qui, lorsqu'il est exécuté sur un appareil d'impression tel que défini suivant l'une quelconque des revendications 1 à 12, met en oeuvre le procédé suivant l'une quelconques des revendications 13 à 23.
